# DEMANDE DE BREVET EUROPEEN

(11) **EP 0 894 427 A1**
(43) Date de publication de la demande: **03.02.1999**
(21) Numéro de dépôt: 98401922.4
(22) Date de dépôt: 28.07.1998
(51) Int. Cl.: A01D 34/73

(54) **Lame de gyro-broyeur**

(30) Priorité: 29.07.1997 FR 9709648
(71) Demandeur: JAVERLHAC, Jean-Charles, Guimps, F-16300 Barbezieux (FR)
(72) Inventeur: JAVERLHAC, Jean-Charles, Guimps, F-16300 Barbezieux (FR)
(74) Mandataire: Nony, Michel

(57) **Abrégé**

Lame de gyro-broyeur munie à l'une de ses extrémités d'un orifice (6) lui permettant d'être fixée sur un axe solidaire du rotor et d'une arête de coupe disposée sur la majorité de la longueur du côté avant de la lame (1), l'arête de coupe (3) étant située sur une partie de la lame légèrement repliée vers le bas selon une ligne (4) sensiblement située dans la partie médiane longitudinale de la lame.

Lame caractérisée par le fait que l'extrémité (14) opposée à l'articulation (6) de la lame sur le rotor comporte sur son côté opposé à l'arête de coupe (3) une ailette (2) repliée vers le bas pour créer un courant d'air centrifuge qui repousse les débris coupés par la lame radialement vers l'extérieur du gyro-broyeur.

## Description

On sait que les gyro-broyeurs sont des engins munis de lames tournant autour d'un axe vertical au ras du sol qui permettent de couper des végétaux, tels que de l'herbe ou des broussailles.

Ces lames sont généralement articulées autour d'un axe voisin de l'axe du rotor qui les entraîne, ce qui leur permet de se maintenir radialement sous l'action de la force centrifuge et de pouvoir se dégager vers l'arrière lorsqu'elles rencontrent un obstacle qu'elle ne peuvent pas couper.

On connaît par les demandes de brevet FR-A-2 686 030 ou FR-A-2 736 504 des lames munies à l'une de leurs extrémités d'un orifice de fixation sur un axe solidaire du rotor et d'une arête de coupe disposée sur la majorité de la longueur de leur côté avant, cette arête de coupe étant située sur une partie de la lame qui est légèrement repliée vers le bas selon une ligne sensiblement située dans la partie médiane longitudinale de la lame, ces lames comprenant en outre une partie arrière repliée de rigidification s'étendant sur toute la longueur de l'arête de coupe.

Les lames décrites dans les demandes FR-A-2 686 030 ou FR-A-2 736 504 n'offrent pas entière satisfaction, notamment quant à leurs performances, et il existe un besoin pour disposer d'une nouvelle lame efficace et de grande longévité.

La présente invention vise à perfectionner les lames du type défini dans le préambule de la revendication 1 en leur procurant une meilleure efficacité et une plus grande longévité.

La présente invention a pour objet une lame de gyro-broyeur munie à l'une de ses extrémités d'un orifice lui permettant d'être fixée sur un axe solidaire du rotor et d'une arête de coupe disposée sur la majorité de la longueur du côté avant de la lame, l'arête de coupe de la lame étant située sur une partie de la lame qui est légèrement repliée vers le bas selon une ligne sensiblement située dans la partie médiane longitudinale de la lame, cette lame étant caractérisée par le fait que l'extrémité opposée à l'axe d'articulation de la lame comporte sur son côté opposé à l'arête de coupe une ailette repliée vers le bas pour créer un courant d'air centrifuge qui repousse les débris coupés par la lame radialement vers l'extérieur du gyro-broyeur.

Dans un mode de réalisation préféré de l'invention, l'orifice qui permet la fixation de la lame sur le rotor du gyro-broyeur se trouve déporté par rapport au plan médian de la lame du côté de cette dernière où se trouve l'arête de coupe et l'ailette repliée vers le bas.

On obtient ainsi, que lorsque la lame est soumise à la force centrifuge due à la rotation du rotor, l'arête de coupe se situe dans un plan horizontal, alors que si cet orifice était situé dans le corps de la lame, le poids de l'arête de coupe et de la partie de la lame repliée en forme d'ailette tendrait à faire soulever l'extrémité de la lame sous l'action de la force centrifuge.

De même, conformément à l'invention, il est avantageux de ne pas placer l'orifice de fixation dans le milieu de la lame, mais de le déplacer en direction du côté de la lame qui comporte l'arête de coupe ; de manière à ce que lorsque la lame est neuve, son extrémité ait tendance à se positionner vers l'avant par rapport au sens de rotation de manière à compenser ainsi l'usure de la lame.

Conformément à l'invention, il est avantageux d'utiliser la partie repliée en ailette à l'arrière de la lame pour constituer un talon qui peut en cas de besoin frotter sur le sol pour faire en sorte que l'arête de coupe effectue bien son travail au voisinage du sol, mais ne le rencontre normalement pas.

De préférence, l'ailette s'étend sur moins de la moitié de la longueur de la lame, et de préférence sur environ un tiers de la longueur de la lame.

De préférence encore, l'arête de coupe est renforcée sur un tiers environ de sa longueur à partir de son extrémité par un élément rapporté sur le dessus de la lame.

La lame est en outre avantageusement percée d'orifices de ventilation dans sa partie médiane longitudinale.

La lame selon l'invention présente l'avantage de posséder une meilleure efficacité, d'éviter les accumulations de matériaux à l'intérieur du carter du gyro-broyeur, et de réduire l'usure de l'arête de coupe qui est auto-affûtante.

Dans le but de mieux faire comprendre l'invention on va en décrire maintenant à titre d'illustration et sans caractère limitatif un mode de réalisation pris comme exemple et représenté sur le dessin annexé dans lequel :
- la figure 1 est une vue en plan d'un mode de réalisation d'une lame de gyro-broyeur selon l'invention,
- la figure 2 est une coupe selon II-II de la figure 1,
- la figure 3 est une coupe selon III-III de la figure 1,
- la figure 4 est une coupe selon IV-IV de la figure 1, et
- la figure 5 est une variante de la figure 4.

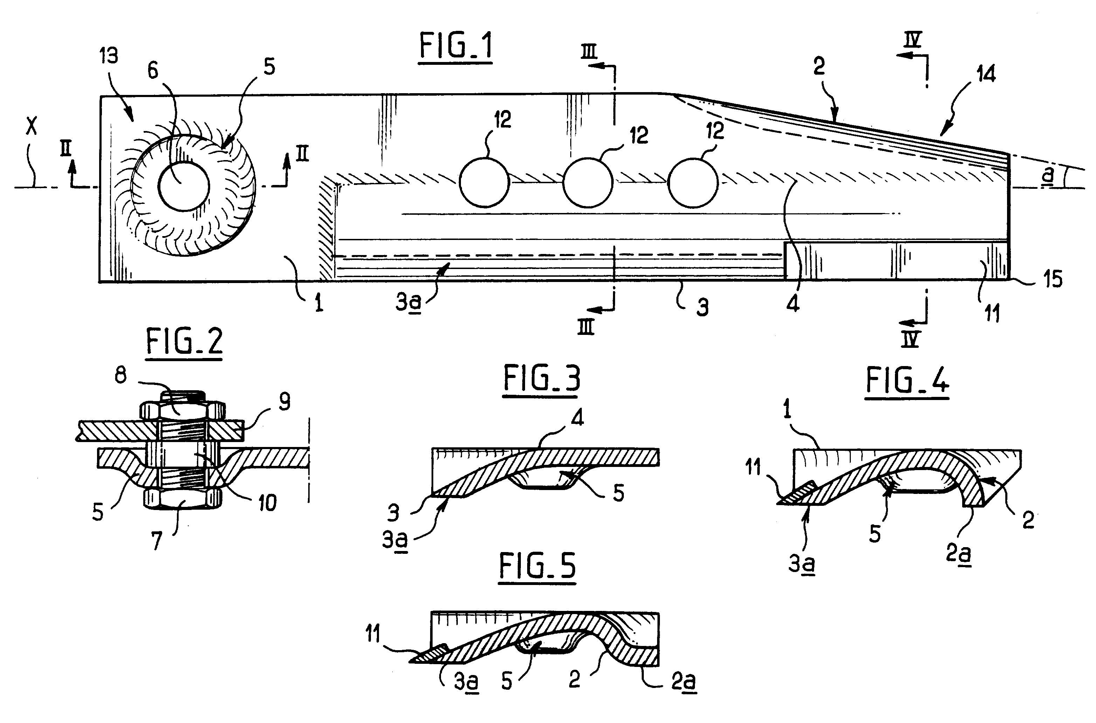

On voit en vue de dessus de la figure 1 la forme générale de la lame 1 qui est rectangulaire d'axe longitudinal X. La lame 1 est munie à une extrémité 13 d'un orifice 6 de fixation et à l'autre extrémité 14 elle présente un coin 2 qui a été replié, par forgeage pour constituer une ailette comme cela sera expliqué ci-après.

On voit également sur le dessin, et en particulier sur la figure 3, comment la partie avant de la lame est repliée vers le bas selon une ligne 4 située dans la partie médiane longitudinale de la lame pour permettre de constituer l'arête de coupe 3 par usinage du chant inférieur 3a de la lame de manière à le rendre parallèle au plan de cette dernière.

L'arête de coupe est renforcée sur un tiers environ de sa longueur à partir de l'extrémité 15 la plus éloignée de l'orifice 6 de fixation au moyen d'un élément 11 en carbure de tungstène ou analogue rapporté sur le dessus de la lame.

On voit également sur les figures 1 et 2, comment la partie gauche de la lame a été déformée en coupelle 5 par forgeage pour permettre de placer l'orifice 6 de fixation de la lame dans un plan qui est déporté vers le bas par rapport au plan de la lame 1.

On a schématiquement représenté sur la figure 2, comment la lame 1 est fixée sur le rotor du gyro-broyeur par un boulon 7 qui s'engage dans l'orifice 6 situé dans la coupelle 5 puis dans un orifice de l'extrémité 9 du rotor pour être maintenu par un écrou 8 qui est bloqué par n'importe quel moyen conventionnel.

selon un mode de réalisation particulier de l'invention, l'orifice 6 est placé plus près du côté de la lame qui est munie de l'arête de coupe 3 que du côté arrière de la lame de manière à obtenir une position sensiblement radiale de l'arête de coupe 3 malgré l'usure de la lame.

On a également schématiquement représenté une bague 10 qui peut être en matière synthétique dure, par exemple en super-polyamide pour permettre une légère souplesse dans le maintien de la lame 1 par rapport au rotor.

On voit sur la coupe de la figure 4 comment sur environ le tiers extérieur de la lame la partie inclinée vers le bas qui aboutit à l'arête de coupe 3 se trouve prolongée vers l'arrière par l'ailette 2 qui est repliée verticalement vers le bas, et dont l'extrémité 29 sert de talon en prenant si besoin appui sur le sol pour protéger l'arête de coupe.

L'ailette 2 fait, dans l'exemple décrit, lorsque la lame est observée de dessus, un angle a avec l'axe longitudinal X, comme on peut le voir sur la figure 1.

On voit que l'extrémité de la lame telle que représentée en coupe sur la figure 4 présente la forme d'un canal arrondi dont la partie inférieure se trouve sensiblement obturée par le sol, ledit canal permettant par un effet centrifuge d'évacuer efficacement vers l'extérieur les débris de végétaux qui ont été sectionnés par l'arête de coupe 3.

On remarque également que l'arête de coupe 3 étant délimitée par la face supérieure inclinée de la lame et par le chant horizontal 3a, l'usure de ce dernier permet un affûtage automatique et permanent de l'arête de coupe.

De surcroît le chant 3a présentant une surface relativement importante par rapport à l'épaisseur de la lame, on réduit ainsi l'usure de cette dernière.

Des orifices de ventilation 12 sont avantageusement réalisés, comme représenté sur la figure 1, au voisinage de la ligne de pliage 4 de la lame, et à mi-longueur de la lame environ, pour favoriser son refroidissement.

Ces orifices sont au nombre de trois dans l'exemple décrit mais pourraient être plus ou moins nombreux, leur nombre étant de préférence compris entre un et quatre.

On a représenté sur la figure 5 une variante de la figure 4 dans laquelle le talon 2a de l'ailette 2 est constitué non point par le chant replié de la partie arrière de la lame, mais par un deuxième repliement qui amène la partie arrière de la lame à constituer le talon 2a par sa face inférieure et non par son chant.

On voit que l'invention permet d'obtenir d'une manière simple et économique par simple forgeage et estampage d'une plaque d'acier rectangulaire, une lame de gyro-broyeur qui présente des caractéristiques fortement améliorées par rapport à celles qui étaient connues avant l'invention.

Il est bien évident que le mode de réalisation qui a été décrit ne présente aucun caractère limitatif et qu'il pourra recevoir toutes modifications désirables, sans sortir pour cela du cadre de l'invention telle que définie par les revendications annexées.

## Revendications

1. Lame de gyro-broyeur munie à l'une de ses extrémités d'un orifice (6) lui permettant d'être fixée sur un axe solidaire du rotor et d'une arête de coupe disposée sur la majorité de la longueur du côté avant de la lame (1), l'arête de coupe (3) étant située sur une partie de la lame légèrement repliée vers le bas selon une ligne (4) sensiblement située dans la partie médiane longitudinale de la lame, lame caractérisée par le fait que l'extrémité (14) opposée à l'articulation (6) de la lame sur le rotor (9) comporte sur son côté opposé à l'arête de coupe (3) une ailette (2) repliée vers le bas pour créer un courant d'air centrifuge qui repousse les débris coupés par la lame radialement vers l'extérieur du gyro-broyeur.

2. Lame selon la revendication 1, caractérisée par le fait que l'orifice (6) qui permet la fixation de la lame (1) sur le rotor (9) du gyro-broyeur se trouve déporté par rapport au plan médian de la lame (1) du côté de cette dernière où se trouve l'arête de coupe (3) et l'ailette (2).

3. Lame selon l'une quelconque des revendications précédentes, caractérisée par le fait que l'orifice (6) qui permet la fixation de la lame (1) sur le rotor (9) est plus près du côté de la lame qui porte l'arête de coupe (3) que de celui qui porte l'ailette (2).

4. Lame selon l'une quelconque des revendications précédentes, caractérisée par le fait que l'extrémité de l'ailette (2) constitue un talon (2a) destiné à prendre appui sur le sol en cas de besoin.

5. Lame selon la revendication 4, caractérisée par le fait que le talon (2a) est constitué par le chant de la lame (1) repliée vers le bas en forme d'ailette (2).

6. Lame selon la revendication 4, caractérisée par le fait que le talon (2a) est constitué par un repliement dans le plan de la lame de l'extrémité de l'ailette (2).

7. Lame selon l'une quelconque des revendications précédentes, caractérisée par le fait que l'ailette (2) est constituée par un coin de la lame replié vers le bas.

8. Lame selon l'une quelconque des revendications précédentes, caractérisée par le fait que l'ailette (2) s'étend sur moins de la moitié de la longueur de la lame (1), et de préférence sur environ un tiers de la longueur de la lame.

9. Lame selon l'une quelconque des revendications précédentes, caractérisée par le fait que l'arête de coupe est renforcée sur un tiers environ de sa longueur à partir de son extrémité (15) par un élément (11) rapporté sur le dessus de la lame.

10. Lame selon l'une quelconque des revendications précédentes, caractérisée par le fait qu'elle est percée d'orifices de ventilation (12), dont le nombre est compris de préférence entre un et quatre, dans sa partie médiane longitudinale.
